# EUROPÄISCHE PATENTSCHRIFT

(11) **EP 0 904 613 B1**
(45) Veröffentlichungstag und Bekanntmachung des Hinweises auf die Patenterteilung: **22.05.2002**
(21) Anmeldenummer: 98920485.4
(22) Anmeldetag: 24.03.1998
(51) Int. Cl.: H01R 31/06, F42B 3/103

(54) **STECKVERBINDER MIT EINER MIT ELEKTRISCHEN BAUELEMENTEN BESTÜCKTEN LEITERBAHNSTRUKTUR SOWIE VERFAHREN ZUR HERSTELLUNG EINES SOLCHEN**
CONNECTOR WITH A STRIP CONNECTOR FITTED WITH ELECTRICAL COMPONENTS, METHOD FOR THE PRODUCTION THEREOF
CONNECTEUR MULTIBROCHES A STRUCTURE CONDUCTRICE COMPORTANT DES COMPOSANTS ELECTRIQUES, ET PROCEDE DE FABRICATION ASSOCIE

(30) Priorität: 24.03.1997 DE 19712314
(43) Veröffentlichungstag der Anmeldung: 31.03.1999
(73) Patentinhaber: Conti Temic microelectronic GmbH, 90411 Nürnberg (DE); Tyco Electronics Logistics AG, 9323 Steinach / SG (CH)
(72) Erfinder: BAUR, Richard, D-85276 Pfaffenhofen (DE); FENDT, Günter, D-86529 Schrobenhausen (DE); BISCHOFF, Michael, D-86529 Schrobenhausen (DE); SCHMIDT, Tanja, D-63879 Weibersbrunn (DE); RÖDER, Jürgen, D-64297 Darmstadt (DE)
(74) Vertreter: Kolb, Georg
(86) Internationale Anmeldenummer: EP9801716
(87) Internationale Veröffentlichungsnummer: WO9843326

(56) Entgegenhaltungen:
- WO-A-97/34786
- DE-A- 2 735 124
- DE-C- 4 413 756
- GB-A- 2 245 775

## Beschreibung

Die Erfindung betrifft einen Steckverbinder mit einer mit elektrischen Bauelementen bestückten Leiterbahnstruktur gemäß Anspruch 1 sowie ein Verfahren zur Herstellung eines solchen gemäß Anspruch 12.

Ein derartiger Steckverbinder soll auf kleinem Raum zwei Stecker miteinander verbinden und dabei eine elektrische Schaltung über eine Leiterbahnstruktur mit elektrischen Bauelementen aufnehmen.

Aus der WO 97/34786 ist eine in Figur 7 der Anmeldung dargestellte Zündeinrichtung zum Auslösen eines Rückhaltemittels in einem Kraftfahrzeug bekannt, bei dem ein Träger als ein dreidimensionaler Kunststoffkörper mit aufgebrachten Leiterbahnen ausgebildet ist und Anschlußstifte einerseits für den einzigen, zum elektrischen Anschluß dienenden Stecker sowie andererseits als Zünderanschlußstifte für den Zünddraht aus den Leiterbahnen abgebogen sind. Wie insbesondere den Figuren 8 bis 11 der WO 97/34786 entnommen werden kann, muß die Leiterbahnstruktur dabei mehrfach abgebogen werden und in dieser dreidimensionalen Struktur über Kunststoffbrücken fixiert werden. Die Bestückung einer derartigen dreidimensionalen Leiterbahnstruktur mit elektrischen Bauelementen erweist sich als äußerst aufwendig, wie bspw. aus den Figuren 1 oder 11 der WO 97/34786 entnommen werden kann. Außerdem ist eine Gruppe von Anschlußstiften als Zündanschlußstifte direkt mit einem Zünddraht ausgeführt und in einem Träger der Zündpille angeordnet. Zwar wird dadurch auf eine zusätzliche Steckverbindung verzichtet, der Fertigungsaufwand aufgrund der nachträglichen Befüllung mit pyrotechnischem Zündpulver aber erhöht und letztlich kaum eine Raumeinsparung gegenüber einer Steckverbindung erreicht. Gerade für Kfz-Elektronik, insbesondere Airbag - Steuergeräte ist eine platzsparende Bauweise von Bedeutung, da die elektrische Schaltung dieser Steuergeräte vorzugsweise direkt an den Gasgeneratoren der Airbags angeordnet werden soll ; jedoch im unmittelbaren Umfeld der Airbags, bspw. in der Lenkradschüssel, im Armaturenbrett oder den seitlich neben den Sitzen gelegenen Teilen der Karosserie nicht oder nur ungenügend Platz zur Verfügung steht.

Die Zündeinrichtung gemäß der WO 97/34786 weist jedoch eine recht erhebliche Länge auf, bedingt durch den Steckerbereich, die länglich räumlich angeordnete Leiterbahnstruktur und die Zündanschlußstifte. Mechanische Belastungen, bspw. auch durch Vibrationen, können daher über einen relativ langen Hebel auf die mechanishen Befestigungselemente wirken. Außerdem ist der Fertigungsaufwand für eine derartige Zündeinrichtung sehr hoch.

Aus der DE 44 13 756 C1 ist Gehäuse für einen Steckverbinder zur Aufnahme einer gestanzten oder geschnittenen Leiterbahnstruktur zu entnehmen, bei der ein elektrisches Bauteil, insbesondere eine HF-Drosselspule, in das Gehäuse integriert ist und bei der die Steck- bzw. Klemmkontakte abgewinkelt aus dem Stanzgitter ausgeformt werden. An einer Gehäusehälfte sind vorspringende Zapfen vorgesehen, mit der die die Leiterbahnen verbindenden Abschnitte beim Schließen des Gehäuses gleichzeitig durchtrennt werden, wobei die einzelnen Leiterbahnen dann über Positionierungsmittel an einer der Gehäusehälften fixiert werden. Eine Bestückung der Leiterbahnen mit einer kompletten elektrischen Schaltung bestehend aus einer Vielzahl von elektrischen Bauelementen ist nicht zu entnehmen und aufgrund der losen Fixierung und der nachträglichen hohen mechanischen Belastung der Leiterbahnen, bspw. auch beim Durchtrennen, nicht möglich. Folglich müssen weitere elektrische Bauelemente außerhalb angeordnet werden. Außerdem ist der vom Gehäuse eingenommene Raum recht groß, insbesondere wenn man berücksichtigt, daß nur ein Bauelement integriert ist.

Die DE 27 35 124 C2 beschreibt ein Verfahren zur Herstellung von gedruckten Schaltungen, bei der die Leiterbahnstruktur verbunden über verbindungsstege aus einem Blech in Form eines Blechzuschnitts herausgearbeitet wird, die Zwischenräume mit Kunststoff verfüllt un so die Leiterbahnen fixiert werden. Dann werden die vom Kunststoff freigehaltenen Verbindungsstege durchtrennt und die Leiterbahnen somit elektrisch isoliert. Die Bestückung einer solchen Schaltung mit elektrischen Bauelementen erfolgt über Aussparungen im Kunststoff. Zur externen Kontaktierung sind am äußeren Randbereich der Leiterbahnstruktur abbiegbare Zungen vorgesehen, in die die Anschlüsse externer Komponenten durch Abkanten und Einrollen befestigt werden. Kontaktelemente, wie für einen Steckverbinder erforderlich, sind somit nicht vorgesehen.

Darüber hinaus ist grundsätzlich bspw. aus der GB 2 245 775 A ein Steckverbinder für Airbags zu entnehmen, bei dem die Kontaktelemente des Steckverbinders für einen Stecker sowie von der entgegengesetzten Seite einzuführenden Leitern in einem Steckerbereich integriert sind, insbesondere einstückig ausgeführt sind. Die Kontur des Steckerbereichs ist dabei so ausgeformt, daß Stecker und Leiter einander nicht behindern. Ein derartiger Steckverbinder ist jedoch nicht zur Aufnahme einer Leiterbahnstruktur mit elektrischen Bauelementen vorgesehen.

Aufgabe der Erfindung ist es, einen Steckverbinder vorzustellen, der einfach und mit einer Vielzahl von elektrischen Bauelementen bestückt herstellbar ist und der trotzdem sehr klein und kompakt aufgebaut ist. Aufgabe ist es weiterhin, ein entsprechend geeignetes Verfahren zur Herstellung von diesem aufzuzeigen.

Diese Aufgaben werden durch die Patentansprüche 1 sowie 12 gelöst. Vorteilhafte Weiterbildungen sowie eine vorteilhafte Verwendung sind den Unteransprüchen zu entnehmen.

Der Steckverbinder weist eine als ebene Fläche ausgeformte Leiterbahnstruktur auf, die einfach mit einer Vielzahl elektrischer Bauelemente zu bestücken ist. Aus der Leiterbahnstruktur werden stiftartige Zungen in einen Steckerbereich derart abgebogen, daß diese die zu verbindenden Steckern dort kontaktieren.

Durch eine fensterförmige Öffnung in der Leiterbahnstruktur wird es möglich, in dem einem gemeinsamen Steckerbereich die zwei Stecker aus entgegengesetzten Richtungen einzufügen. Bei entsprechender Gestaltung der Stecker und des Steckerbereichs kann somit in erheblichem Maße Platz gespart werden, indem die Stecker quasi ineinander hineinragen.

Die Leiterbahnstruktur ist als gestanztes Leadframe aus einem Metallband relativ einfach herstellbar und kann auch über eine Lochbandführung an beiden Seiten die Leiterbahnstruktur zudem einfach maschinell transportiert werden. Eine Kunststoffverspritzung fixiert nicht nur die Leiterbahnen zuverlässig, sondern wirkt als elektrische Isolierung und zusatzlich als Gehäuse mit mechanischen Funktionen, insbesondere im Steckerbereich, in dem die Kunststoffverspritzung als eine Steckerkontur ausgeformt ist.

Neben der Kunststoffverspritzung kann auch durch ein Assemblageteil aus Kunststoff die Halterung der Leiterbahnstruktur realisiert werden, in dem die Leiterbahnstruktur darin befestigt, bspw. eingepreßt oder verklebt wird.

Die aus den abgebogenen stiftartigen Zungen ausgeformten Anschlußstifte wie auch die Buchsenkontakte sind prinzipiell für jeden der Stecker verwendbar, wobei selbstverständlich die Ausrichtung auf die jeweilige Richtung des Einführens des Steckers erfolgt. Die Zungen der Anschlußstifte können so beispielsweise einerseits einfach oder andererseits auch U-förmig abgebogen werden.

Die Anschlußstifte kontaktieren dabei buchsenförmige Kontaktelemente an den jeweils zugeordneten Steckern, die Buchsenkontakte stiftförmige Kontaktelemente. Das erfinderische Konzept erlaubt daher eine Variation der jeweils ausgewählten Kontaktelemente entsprechend den Erfordernissen. Die Buchsenkontakte werden vorzugsweise in Isolierkammern gehalten und über seitlich abgebogene Kontaktfahnen mit entsprechend strukturierten Kontaktzonen in der Leiterbahnstruktur elektrisch verbunden.

Durch mehrere konstruktive Ausgestaltungen des erfindungsgemäßen Steckverbinders mit mechanische Halte- und Arretierungselementen kann eine solche Steckverbindung gegen versehentliches Lösen gut gesichert werden. Dabei wird darauf geachtet, daß zur Sicherung gegen eine Falschpolung auch Verpolschutzmittel vorgesehen werden. Durch einen Deckel wird die Leiterbahnstruktur mit den Bauelementen dann abgedeckt, wobei dieser ebenfalls eine fensterförmige Öffnung aufweist, durch die hindurch der zweite Stecker in den Steckerbereich eingeführt wird.

Das Verfahren zur Herstellung erweist sich gegenüber dem eingangs erwähnten Stand der Technik als deutlich einfacher. Zunächst kann in einem einzigen Arbeitsgang die Rohform der Leiterbahnstruktur mit allen funktionellen Bestandteilen hergestellt werden, also neben den Leiterbahnen, die noch über Haltestege gesichert sind, die stiftartigen Zungen sowie die fensterförmige Öffnung ausgebildet werden. Durch die einstückige Ausbildung vereinfacht sich nicht nur die Fertigung, sondern in ganz wesentlichem Maße entsteht eine mechanisch sehr stabile, elektrisch sehr gut leitfähige und insbesondere nicht störanfällige Verbindung zwischen den Anschlußstiften und den Leiterbahnen. Im dem die Leiterbahnstruktur mit der abgebogenen Leiterbahnstruktur nachfolgend durch Kunststoffverspritzung fixiert wird, entsteht neben der Fixierung für die nachfolgend freigeschnittenen Leiterbahnen auch gleichzeitig der Steckerbereich zur Aufnahme der Stecker, zur Isolierung der einzelnen Kontaktelemente voneinander sowie zur mechansichen Halterung und Arretierung.

Trotzdem läßt sich die als ebene Fläche ausgebildete Leiterbahnstruktur noch äußerst einfach mit elektronischen Bauelementen bestücken. Beispielsweise durch sogenanntes Inlay-Sn-plating oder spot-plating mit anderen metallischen Auflagen wird die Leiterbahnstruktur lokal beschichtet und die darauf angeordneten Bauelemente durch Reflow-Löten verbunden. Dabei werden auch die seitlich abgebogenen Kontaktfahnen der Buchsenkontakte auf die Kontaktzonen der Leiterbahnstruktur gelötet.

Die Erfindung wird nachfolgend anhand von Ausführungsbeispielen und Figuren näher erläutert.

Weitere Einzelheiten der in den Patentansprüchen gekennzeichneten Erfindung werden nachstehend anhand der beigefügten Zeichnung erläutert. Es zeigen:
- Fig. 1: Gesamtansicht in Explosionsdarstellung
- Fig. 2: Rohform der Leiterbahnstruktur mit den stiftartigen Zungen und der fensterförmigen Öffnung einer abweichenden Ausgestaltung
- Fig. 3: Leiterbahnstruktur mit als Anschlußstifte abgebogenen Zungen und Buchsenkontakt gemäß Fig. 2
- Fig.4: Steckverbindung im gesteckten Zustand mit Schnitt durch den Steckerbereich
- Fig. 5: Ausgestaltung des zweiten Steckers sowie Kunststoffumspritzung des Steckverbinders
- Fig. 6: Steckverbindung vor und nach dem Eindringen des zweiten Steckers durch die fensterförmige Öffnung hindurch in den Steckerbereich sowie Zurückstellen der Kurzschlußbrücke dabei
- Fig. 7: Zündeinrichtung gemäß dem Stand der Technik
- Fig. 8: Steckverbinder zum Vergleich zu Fig. 7
- Fig. 9: Ansicht der Kontur des Steckers S II
- Fig. 10: Ansicht auf den Steckerbereich Ca bei eingefügtem Stecker S I

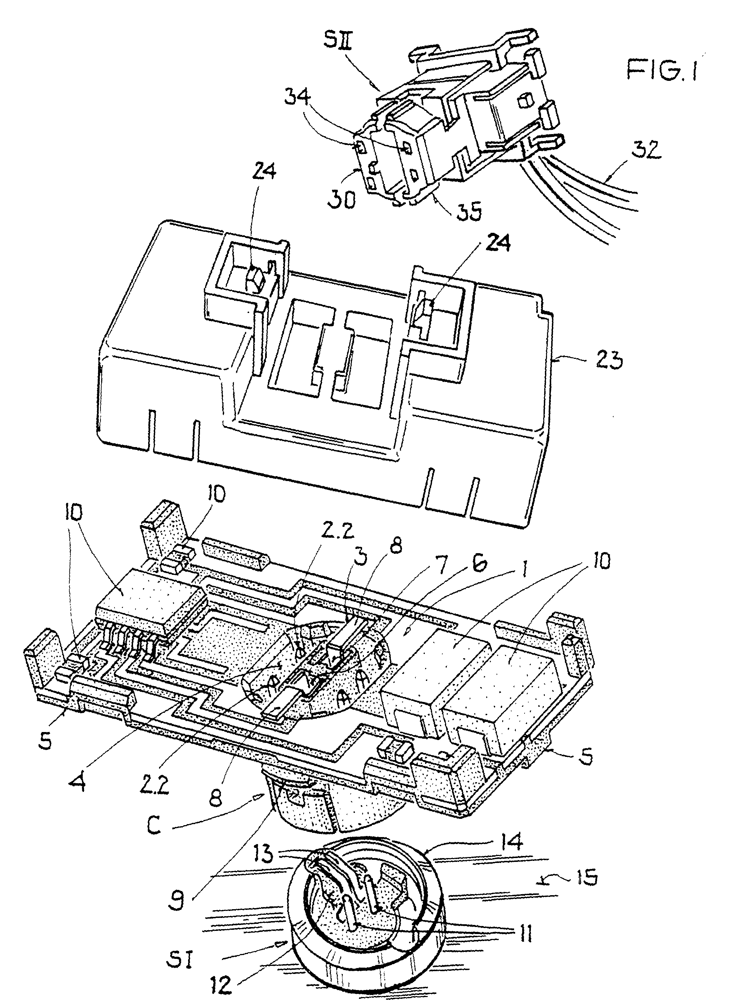

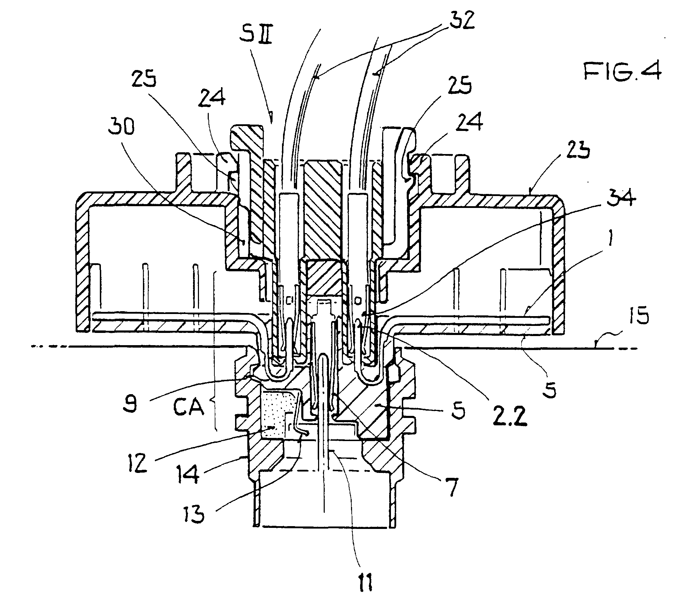

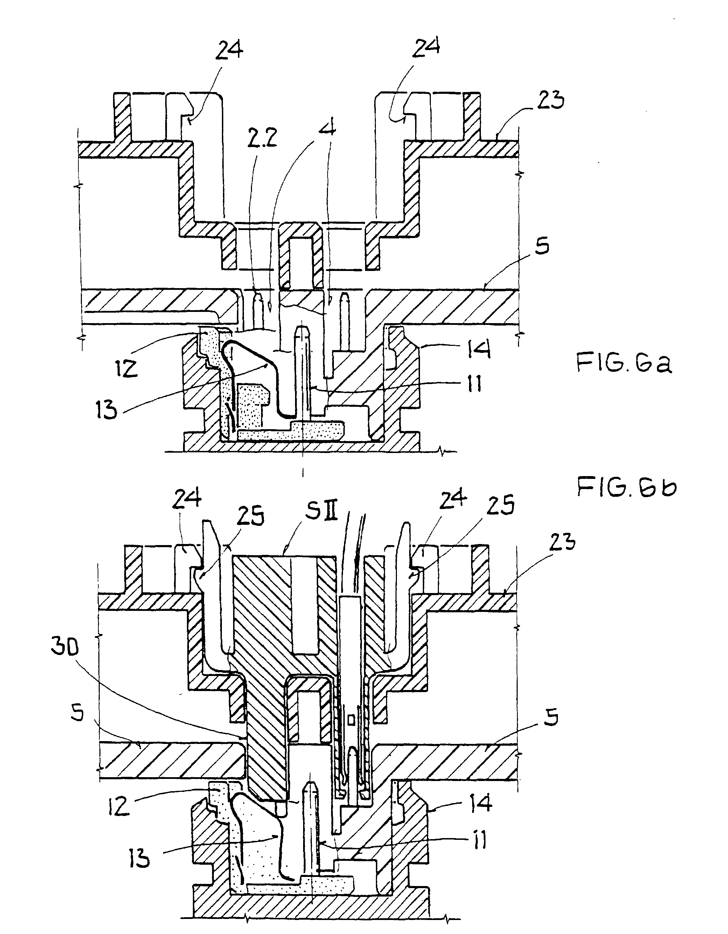

Die Fig. 1 zeigt in einer Gesamtansicht teilweise explosionsartig zerlegt den Steckverbinder C mit den beiden zu verbindenden Steckern S I und S II. Der Steckverbinder C weist eine Leiterbahnstruktur 1 auf, die durch eine Kunststoffumspritzung 5 fixiert ist und die auf ihrer ebenen Oberseite mit Bauelementen 10 bestückt ist. Gut zu erkennen ist auch die fensterförmige Öffnung 4 in der Leiterbahnstruktur 1, an die sich der beidseitig kontaktierbare Steckerbereich CA anschließt, der aufgeschnitten bspw. in Fig. 4 und 6 noch besser erkennbar ist. Innerhalb des Steckerbereichs CA sind in der Fig. 1 die Anschlußstifte 2.2 dargestellt, die - wie aus den nachfolgenden Figuren noch deutlicher wird - aus der Leiterbahnstruktur 1 durch Abbiegen, in diesem Fall U-förmig aus stiftartigen Zungen 2.0 der Leiterbahnstruktur 1 hergestellt werden. Die Anschlußstifte 2.2 werden mit den buchsenförmigen Kontaktelementen 34 des Steckers S II kontaktiert, wenn dieser durch die fensterförmige Öffnung 4 hindurch in den Steckerbereich CA eindringt.
Des weiteren sind im Steckerbereich CA die Isolierkammern 6 der Buchsenkontakte 7 zu erkennen, die in diese eingepreßt und/oder eingerastet werden. Die Buchsenkontakte 7 weisen seitlich abgebogene Kontaktfahnen 8 auf, über die die Buchsenkontakte 7 mit Kontaktzonen 3 der Leiterbahnstruktur 1 verbunden, bspw. zusammen mit den Bauelementen 10 verlötet werden. Die Buchsenkontakte 7 werden mittels Rasten oder Verklemmen in den Isolierkammern 6 gehalten und bspw. mittels Inlay-Sn-plating durch selektive Walzplazierung auf die Kontaktzonen 3 der Leiterbahnstruktur 1 aufgebrachten Zinn-Depots zusammen mit elektronischen Bauelementen 10 mit der Leiterbahnstrukur 1 verbunden. In diesem Ausführungsbeispiel werden die Buchsenkontakte 7 von unten her mit den Kontaktelementen 11 des ersten Steckers S I kontaktiert, wenn dieser mit dem Steckerbereich CA verbunden wird. Der Stecker S I ist in diesem Ausführungsbeispiel gemäß der bevorzugten Verwendung als Anschlußstecker einer Zündeinrichtung eines Gasgenerators 15 bspw. für Airbags oder Gurtstraffer o.ä. ausgeführt. Die Kontaktelemente 11 sind in diesem Ausführungsbeispiel gemäß Fig. 1 stiftförmig ausgebildet und innerhalb des nicht näher dargestellten Gasgenerators 15 über einen Zünddraht innerhalb einer pyrotechnischen Primärzündladung miteinander verbunden, so daß durch die im Steckverbinder C räumlich integrierte Schaltung, bestehend aus den über die Leiterbahnstruktur 1 verbundenen Bauelementen 10, der Gasgenerator 15 über eine entsprechende Zündspannung zwischen den Kontaktelementen 11 ausgelöst werden kann. um eine Absicherung dieser Kontaktelemente 11 gegen eine versehentliche Auslösung durch Störungen, bspw. elektrostatische Aufladung beim Montieren zu vermeiden, ist am Stecker S I eine Kurzschlußbrücke 13 vorgesehen, die in einem Träger 12 angeordnet ist. Diese Kurzschlußbrücke 13 kann aber auch innerhalb des Steckerbereichs CA vorgesehen werden, indem sie dort bspw. die Kontaktelemente des Steckerbereichs für den Stecker S II, also. in diesem Ausführungsbeispiel die Buchsenkontakte 7 kurzschließt, bis der Stecker S II gesteckt wird.

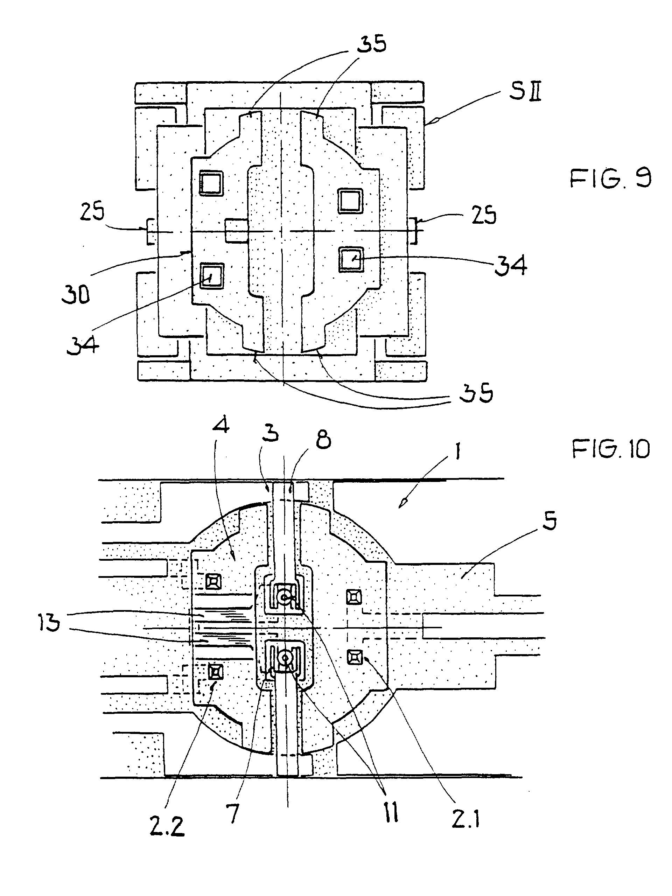

Aus der Figur 1 wird bereits deutlich, daß die Konturen 14 bzw. 35 der Stecker S I bzw. S II, also die Formungen der innen- oder Außenwandungen dieser, entsprechend dem Steckerbereich CA angepaßt (vgl.dazu auch Fig. 9 und 10) und mit Arretierungselementen, die z.T. nicht näher bezeichnet wurden, ausgestaltet sind. Der die Leiterbahnstruktur 1 mit den Bauelementen 10 schützende Deckel 23 weist ebenso Arretierungselemente auf, die entsprechend mit dem Stecker S II korrespondieren. So weist der Deckel 23 Clips-Nocken 24 auf, die mit Clips-Nocken 25 des Steckers S II ineinandergreifen (vgl. auch Fig. 4). Der Stecker S II ist mit dem Kabelbaum 32 verbunden. An der Kontur 35 des Steckers S II ist ein Rückstellteil 30 integriert, welches durch den Steckerbereich CA hindurch beim Eindringen des Steckers S II auf die Kurzschlußbrücke 13 wirkt (vgl. auch Fig. 10).

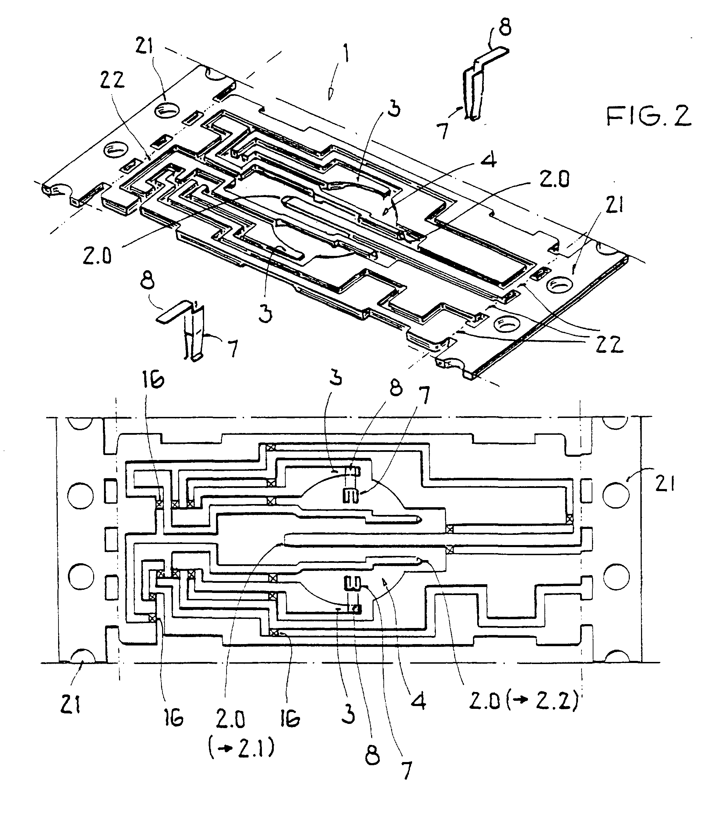

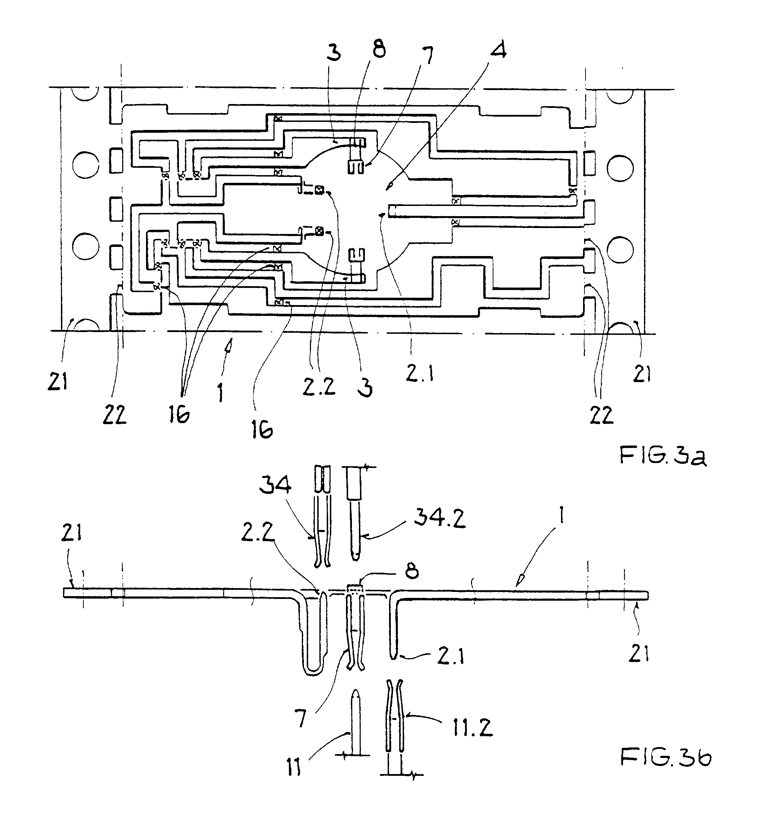

Die Figur 2 zeigt eine Leiterbahnstruktur 1 einer von der Fig. 1 abweichenden Ausgestaltung in ihrer Rohform. Die Leiterbahnstruktur 1 des Steckverbinders C wird in kostengünstiger Weise serienmäßig als Endlosband vorgefertigt und erst unmittelbar vor der Endmontage durch Trennen der beidseitigen Lochränder 21 aus dem Verbund gelöst. Die einzelnen Leitbahnen der Leiterbahnstrukutr 1 werden gemeinsam aus einem Metallband ausgestanzt, wobei zusätzliche Haltestege 16 diese zunächst miteinander halten und noch verbinden. Deutlich erkennbar sind die auch zunächst noch flach in der bereits mit herausgestanzten und erkennbaren fensterförmigen Öffnung 4 befindlichen stiftartigen Zungen 2.0, die durch Abbiegen in den Steckerbereich CA als Anschlußstifte 2.1 oder 2.2 verwendet werden, wie dies in Klammern gesetzt an den Bezugszeichen angemerkt wurde. Neben den Haltestegen 16 sind auch noch die Stege 22 zum Lochrand 21 deutlich zu erkennen. Der beidseitige Lochrand 21 dient zum Handhaben und Transportieren der Leiterbahnstruktur 1 während der Fertigung. Die Stege 22, die beim Abtrennen des Lochrandes 21 stehenbleiben, dienen als Prüfpins für die nachfolgend aufgebrachten Bauelemente 10 bzw. die Gesamtschaltung, die durch Verschaltung dieser über die Leiterbahnstruktur 1 entsteht. Für die elektrische Funktion müssen jedoch noch die Haltestege 16 entfernt und die einzelnen Leiterbahnen freigeschnitten werden. Dies erfolgt, nachdem durch Kunststoffumspritzung 5 die Leiterbahnen mechanisch fixiert sind. Vor dem Umspritzen mit Kunststoff werden jedoch noch die stiftartigen Zungen 2.0 als Anschlußstifte 2.1 bzw. 2.2 in den Steckerbereich CA gebogen, wie dies in Fig. 3a/b in zwei Ansichten besonders anschaulich verdeutlicht wird.

Die Figur 3 verdeutlicht zusätzlich anhand der nun abgebogenen Zungen die Variationsvielfalt derartiger Steckverbinder, für die innerhalb der fensterförmigen Öffnung 4 verschiedene Ausgestaltungesformen denkbar sind. So wird besonders deutlich, daß ein Buchsenkontakt 7 grundsätzlich für jeden der zwei Stecker SI / SII verwendet werden kann, indem entsprechende stiftförmige Kontaktelemente eingesetzt werden, die am Stecker Si gemäß Fig. 1 mit 11 bezeichnet sind oder aber am Stecker SII, bezeichnet als 34.2 und im Ausführungsbeispiel gemäß Fig. 1 nicht verwendet. Analog dazu lassen sich aus den stiftartigen Zungen 2.0 durch bspw. einfaches Abbiegen Anschlußstifte 2.1 für buchsenförmige Kontaktelemente 11.2 des Steckers SI (in Fig. 1 nicht ausgeführt) als auch durch doppeltes bzw. U-förmiges Abbiegen Anschlußstifte 2.2 für für buchsenförmige Kontaktelemente 34 des Steckers SII gewinnen.

Zu berücksichtigen ist bei der Ausgestaltung des Steckerbereichs CA, daß die Kontaktfahnen 8 sowie die Anschlußstifte 2.1 und 2.2 einander nicht behindern und das Einführen der Stecker ermöglichen, welche entsprechende Aussparungen in ihren Konturen 14/35 aufweisen (vgl. insb. S II in Fig. 1). Die fensterförmige Öffnung 4 kann dazu quasi in eine Bereichsmatrix aufgeteilt und die einzelnen Felder dieser den Kontaktelementen sowie deren Verbindungselementen zugewiesen werden.

Zusätzlich ist auch die Lage der Buchsenkontakte 7 mit visualisiert. im gemeinsamen Steckerbereich CA befinden sich also parallel zueinander die zwei Gruppen von Kontaktelementen für die zwei Stecker SI/SII. Gleichzeitig werden diese jedoch über die senkrecht dazu befindliche Leiterbahnstruktur 1 mit auf dieser ebenflächig angeordneten Bauelementen 10 verbunden.

Die Figur 4 zeigt nun die Steckverbindung im gesteckten zustand. Deutlich erkennbar wird, wie der Stecker S I von unten her sowie der Stecker S II von oben durch die fensterförmige Öffnung 4 inder Leiterbahnstruktur 1 in den gemeinsamen Steckerbereich CA eindringen. Ausgehend vom Kabelbaum 32 kommt es so zu einer geschlossenen elektrischen verbindung über die Kontaktelemente 34 am Stecker S II an die Anschlußstifte 2.2, von diesen über die Leiterbahnstruktur 1 mit den Bauelementen 10 hin zu den Kontaktzonen 3, an denen die Buchsenkontakte 7 mit ihren Kontaktfahnen angeschlossen sind, und die Buchsenkontakte 7 letztendlcih mit den Kontaktelementen 11 des Steckers S I in Berührung stehen. Die Ausgestaltung der Kontaktelemente ist dabei, wie aus Fig. 3 deutlich wurde, varierbar. Aus der Figur 4 ist durch entsprechende Schnittdarstellung auch gut zu erkennen, wie der Anschlußstift 2.2 in der Kunststoffumspritzung 5 und der Buchsenkontakt 7 in der Isolierkammer 6 fixiert ist. Die Kurzschlußbrücke 13 ist durch das Eindringen des Steckers S II zurückgestellt und die Kontaktelemente 11 des Steckers S I somit nicht länger kurzgeschlossen, da nunmehr deren Absicherung über die auf der Leiterbahnstruktur 1 mit den Bauelementen 10 realisierten Schaltung gewährleistet ist.

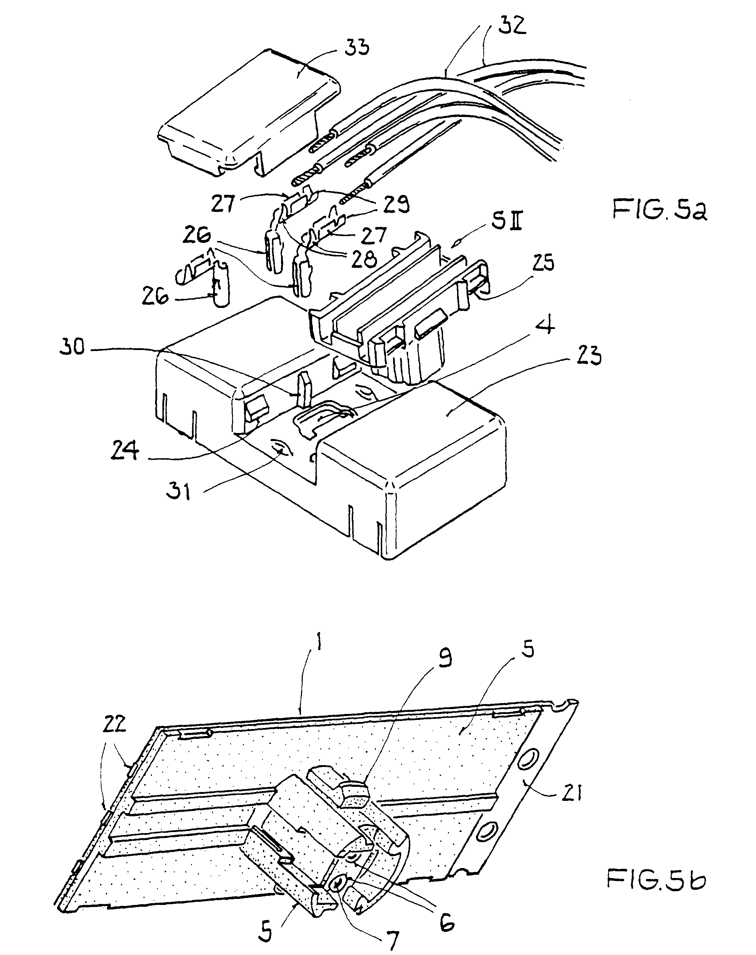

Die Figur 5 a zeigt eine weitere Ausgestaltung des Deckels 23 und des Steckers S II. Dabei wird mittels auf dem Deckel 23 angebrachter, auf den Stecker II wirkender Federzungen 31 eine vorspannung zwischen den Teilen erzielt. Es ist schließlich der Deckel 23 an seinen äußeren Flächen mit Nocken 30 versehen, die mit entsprechenden Konturen des Steckers II eine Codierung bzw. Polarisierung der Steckverbindung bewirken.
Die Leitungen 32 sind im Stecker S II mittels Schneidklemm-Kontakten 26 mit beidseitig der Schneidklemmzone 27 angeordneten Zugentlastungsklammern 28, 29 gehalten, wodurch im Stecker eine doppelte Zugentlastung erzielt wird. Die Anordnung wird durch eine Abdeckung 33 verschlossen.

Die Figur 5b zeigt nun noch einmal, wie die Leiterbahnstrukur 1 durch Kunststoff fixiert wird, welches als Assamblageteil angefügt oder vorzugsweise als Kunststoffumspritzung 5 ausgeführt ist. Die Kunststoffumspritzung 5 deckt einerseits die Leiterbahnstruktur 1 einseitig ab, wobei die einzelnen Leiterbahnen dabei fixiert werden, formt andererseits aber auch den Steckerbereich CA aus, dessen innere und äußere Kontur mit denen der Stecker SI und SII zusammenpaßt. in der Kontur des Steckerbereichs CA werden Arretierungselemente (z.B. die äußeren federnden Rasthaken 9 sowie innere Rastöffnungen) realisiert, durch die eine mechanische Haltung zwischen den Steckern und dem Steckverbinder bewirkt wird. in der Außenwandung des Steckerbereichs sind federnde Rasthaken 9 ausgebildet, mit denen die Kontur des Steckers S II bspw. des Gasgeneratorgehäuses verrastet werden können und die aufgrund ihrer Lage im Einschubweg des Steckers SII beim Einstecken des Steckers SII in seine Kontur derart blockiert werden, daß ein Einfedern der Rasthaken 9 nach innen und damit ein Lösen der Rastverbindung zuverlässig ausgeschlossen ist. Außerdem können durch die Kunststoffumspritzung auch die Isolierkammern 6 für die Buchsenkontakte 7 ausgeformt werden, in die diese dann eingesetzt werden.

Die Kontur des Steckerbereichs CA mit den Arretierungselementen und den Isolierkammern 6 sind integraler Teil der Kunststoffumspritzung 5 und werden in einem Arbeitsgang auf die Leiterbahnstruktur 1 aufgebracht, wodurch eine kostensparende Herstellung des Steckverbinders C gewährleistet wird.

Dieses konstruktive Zusammenspiel zwischen dem Steckverbinder C und den Steckern S I / S II wird anhand der Figuren 6a und 6b detailiert dargestellt. Im vergleich der Figuren 6a und 6b wird besonders anschaulich deutlich, wie mit dem Eindringen des Steckers S II die Kurzschlußbrücke 13 von den Kontaktelementen 11 zurückgestellt wird, indem das Rückstellteil 30 durch eine Aussparung in der Kunststoffumspritzung 5, die auf der Rückseite dieser in Fig. 5b erkennbar ist, hindurch auf die zwischen den Anschlußstiften 2.2 in den steckerbereich CA hineinragende Kurzschlußbrücke 13 wirkt.

Durch das Eindringen des Steckers S II wird außerdem die Rückbewegung des Rasthakens 9 verhindert, so daß sich der Steckverbinder C nicht vom Stecker S I ablösen kann, solange der Stecker S II gesteckt ist (vgl. auch Fig. 4).

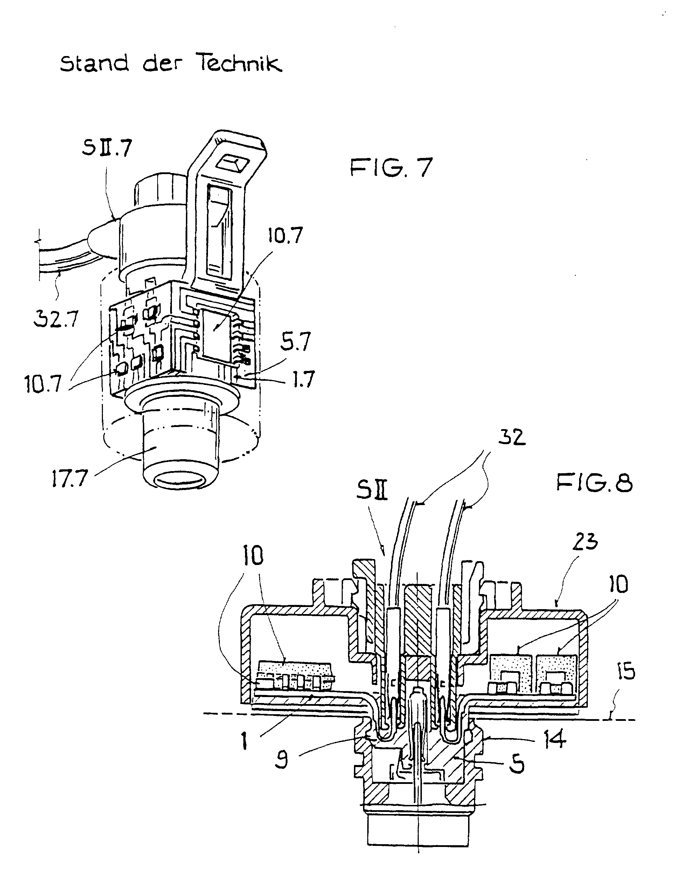

Die Figur 7 erlaubt den Vergleich zwischen dem erfindungsgemäßen Steckverbinder, der zum Vergleich in Fig. 8 dargestellt ist, mit dem aus dem Stand der Technik bekannten Anordnung. Die Bauelemente 10.7 werden hierbei auf eine dreidimensional gebogene quaderförmige Leiterbahnstruktur aufgebracht und zum Teil in diese eingesenkt. Aus dieser Leiterbahnstruktur werden die Anschlußstifte nach oben zum Stecker S II.7 und nach unten in die Primärzündkammer 17.7 abgebogen. Dadurch ist die Bauhöhe derart erhöht. Die Kunststoffumspritzung 5.7 ist aufwendiger und die Leiterbahnstruktur 1.7 aufwendiger in der Bestückung.

Der erfindungsgemäße Steckverbinder C gemäß Fig. 8 liegt großflächig an der Außenwand des Gasgenerators 15 an und ist dadurch deutlich unempfindlicher gegenüber mechanischen Belastungen. Durch den für beide Stecker gemeinsamen Steckerbereich CA verringert sich die Bauhöhe. Die senkrecht zum Steckerbereich CA angeordnete Leiterbahnstruktur 1 ist als Ebene einfach bestückbar.

Anhand der Figuren 9 und 10, die die Konturen des Stecker S II und des Steckerbereichs CA zeigen, wird die Verpolsicherheit dieser nochmals deutlich, da die Konturen so gestaltet sind, daß sich die Stecker S I / S II nur in einer weise in den Steckerbereich CA fügen lassen.

Zusätzlich können über die Konturen auch die Stecker und der Steckverbinder auch zueinander codiert werden, so daß für einen bestimmten Stecker, bspw. einen bestimmten Airbagtyp, nur genau ein Steckverbinder mit der jeweils zugehörigen Schaltungsanordnung auf der Leiterbahnstruktur paßt.

Dazu sind am Stecker S II die Kontaktelemente 34 trapezförmig mit zwei unterschiedlich langen Abständen zwischen jeweils zwei dieser Kontaktelemente 34 angeordnet. Außerdem besteht die Möglichkeit, durch ungleichlange Seitenkanten der hervorstehenden Kontur 35 (vgl. auch S II in Fig. 1) sowie entsprechende Ausgestaltung der Kontur des Steckerbereichs CA eine Verpolsicherung zu erreichen. Zusätzlich wirken die Aussparungen in der Kontur 35 des Steckers S II für die Buchsenkontakte 7 mit ihren Kontaktfahnen 8 und ihren Isolierkammern 6 gegen eine verdrehte Einführung des Steckers S II (vgl. auch dreidimensionale Ansicht in Fig. 1).

Der Stecker S I ist durch die einseitige Ausgestaltung des Trägers 12 der Kurzschlußbrücke 13 verpolsicher ausgeführt. Aus Fig. 10 ist besonders gut zu erkennen, wie die Kurzschlußbrücke 13 durch eine Aussparung in der Kunststoffumspritzung 5 des Steckerbereichs CA in diesen eindringt und dort durch das an der Kontur 35 des Steckers S II integrierte Rückstellteil 30 beim Einführen des Steckers S II von den Kontaktelementen 11 rückgestellt wird.

## Patentansprüche

1. Steckverbinder (C) mit einer mit elektrischen Bauelementen (10) bestückten Leiterbahnstruktur (1), bei dem
a1) ein erster Stecker (SI) über eine erste Gruppe von Kontaktelementen (7/2.1) mit der Leiterbahnstruktur (1) verbunden ist,
a2) die Leiterbahnstruktur (1) aus einem Metallband ausgeformt ist,
a3) die Leiterbahnstruktur (1) wiederum über eine zweite Gruppe von Kontaktelementen (2.2/7) mit einem zweiten Stecker (SII) verbunden ist,
b) die Leiterbahnstruktur (1) als eine ebene Fläche senkrecht zu den Kontaktelementen (2.1,2.2,7) ausgeführt ist,
c) in der Leiterbahnstruktur (1) eine fensterförmige Öffnung (4) ausgebildet ist, an die sich senkrecht in eine Richtung ein Steckerbereich (CA) anschließt,
d) der steckerbereich (CA) sowohl den ersten Stecker (SI) als auch aus der entgegengesetzten Richtung durch die fensterförmige Öffnung (4) der Leiterbahnstruktur (1) hindurch den zweiten Stecker (SII) aufnimmt,
e) jede der zwei Gruppen von Kontaktelementen des Steckverbinders (C) aus jeweils wenigstens einem Kontaktelement besteht, die ausgebildet sind
e1) als ein Anschlußstift (2.1,2.2) in Form einer in den Steckerbereich (CA) abgebogenen stiftartigen Zunge (2.0) der Leiterbahnstruktur (1), der dort mit einem zugeordneten buchsenfömigen Kontaktelement (34,11.2) des jeweils zugeordneten Steckers verbunden ist, oder
e2) als ein Buchsenkontakt (7), der im Steckerbereich (CA) mit einem zugeordneten stiftfömigen Kontaktelement (34.2,11) des jeweils zugeordneten Steckers und andererseits mit der Leiterbahnstruktur (1) elektrisch verbunden ist.

2. Steckverbinder nach Anspruch 1, **dadurch gekennzeichnet, daß** der Steckerbereich (CA) Isolierkammern (6) für die Buchsenkontakte (7) aufweist, in denen diese mittels Rasten oder Verklemmen gehalten werden.

3. Steckverbinder nach Anspruch 2, **dadurch gekennzeichnet, daß** jeder Buchsenkontakt (7) eine seitlich abgebogene Kontaktfahne (8) aufweist und am Rand der fensterförmigen Öffnung (4) in der Leiterbahnstruktur (1) Kontaktzonen (3) vorgesehen sind, über die die Buchsenkontakte (7) mit ihren Kontaktfahnen (8) elektrisch mit der Leiterbahnstruktur (1) verbunden sind.

4. Steckverbinder nach Anspruch 1, **dadurch gekennzeichnet, daß** die Leiterbahnstruktur (1) einschließlich der Kontaktelemente im Steckerbereich (CA) mit einer Kunststoffverspritzung (5) fixiert sind und diese Kunststoffverspritzung (5) eine Kontur aufweist, die eine mechanische Halterung des ersten und des zweiten Steckers (S I/S II) ermöglicht.

5. Steckverbinder nach Anspruch 4, **dadurch gekennzeichnet, daß** der Steckerbereich (CA) in seiner Kontur für beide Stecker Arretierungselemente, insbesondere Rasthaken und/oder Rastöffnungen, aufweist und dadurch beide Stecker nach dem Einfügen in den Steckerbereich (CA) arretiert sind.

6. Steckverbinder nach Anspruch 1, **dadurch gekennzeichnet, daß** ein die Leiterbahnstruktur (1) mit den elektrischen Bauelementen (10) überdeckender Deckel (23) vorgesehen ist, der ebenfalls eine fensterförmige Öffnung aufweist, durch die hindurch der zweite Stecker (S II) in den Steckerbereich (CA) eingeführt ist.

7. Steckverbinder nach Anspruch 6, **dadurch gekennzeichnet, daß** am Deckel (23) Arretierungselemente (24) für den zweiten Stecker (S II) vorgesehen sind.

8. Steckverbinder nach einem der vorangehenden Ansprüche 4 bis 7, **dadurch gekennzeichnet, daß** zur Sicherung gegen eine Falschpolung Verpolschutzmittel vorgesehen sind, so daß die Stecker nur in einer der vorgegebenen elektrischen Polung entsprechenden Lage einfügbar sind.

9. Steckverbinder nach Anspruch 8, **dadurch gekennzeichnet, daß** die Arretierungselemente des Steckerbereichs (CA) und/oder Arretierungselemente (24) des Deckels (23) bezüglich der Stecker (SI/SII) als Verpolschutzmittel angeordnet sind.

10. Steckverbinder nach einem der vorangehenden Ansprüche, **dadurch gekennzeichnet, daß** eine Kurzschlußbrücke (13) zum Kurzschließen von Kontaktelementen (11) des ersten Steckers (S I) vorgesehen ist, die durch das Einführen des zweiten Steckers (S II) zurückgestellt wird.

11. Steckverbinder nach einem der vorangehenden Ansprüche, **dadurch gekennzeichnet, daß** am Deckel (23) Federzungen (31) zur Erzielung einer Vorspannung zwischen dem Steckerbereich (CA) und dem zweiten Stecker (SII) angeordnet sind.

12. Verfahren zur Herstellung eines Steckverbinders (C) mit einer mit elektrischen Bauelementen (10) bestückten Leiterbahnstruktur (1) gemäß einem der vorangehenden Ansprüche 2 bis 10, **gekennzeichnet durch** folgende Merkmale:
a) Ausstanzen einer Rohform der Leiterbahnstruktur (1) einstückig aus dem Metallband, wobei Leiterbahnen und stiftartige Zungen (2.0) ausgebildet werden, die **durch** zusätzliche Haltestege (16) gehalten werden,
b) in der Leiterbahnstruktur eine fensterförmige Öffnung (4) ausgespart wird, in welche zur Bildung eines Steckerbereichs (CA)
b1) eine erste Gruppe (2.1) der stiftartigen Zungen (2.0) senkrecht als Kontaktelemente zu einem ersten Stecker (SI) und
b2) eine zweite Gruppe (2.2) der stiftartigen Zungen (2.0) U-förmig als Kontaktelemente zu einem zweiten Stecker (SII) abgebogen werden,
b3) wobei der zweite Stecker (SII) aus der entgegengesetzten Richtung wie der erste Stecker (SI) **durch** die fensterförmige Öffnung (4) der Leiterbahnstruktur (1) hindurch in den Steckerbereich (CA) eindringt,
c) Fixieren der Leiterbahnstruktur (1) **durch** Kunststoffverspritzung (5),
d) Auftrennen der Haltestege (16) zum elektrischen Isolieren der einzelnen Leiterbahnen,
e) Bestücken der Leiterbahnstruktur (1) mit elektrischen Bauelementen (10).

13. Verfahren nach Anspruch 12, **dadurch gekennzeichnet, daß** die Kunststoffverspritzung (5) zum Fixieren der Leiterbahnstruktur (1) die Leiterbahnstruktur (1) einseitig zumindest abschnittsweise abdeckt und gleichzeitig der Steckerbereich (CA) mit ausgeformt wird.

14. Verfahren nach Anspruch 12, **dadurch gekennzeichnet, daß** die Leiterbahnstruktur (1) mit einem Lochrand (21) ausgestanzt wird und Stege (22), die Leiterbahnstruktur (1) mit dem Lochrand (21) verbinden, nach dem Abtrennen des Lochrandes (21) als Prüfpins für die auf der Leiterbahnstruktur (1) angeordneten Bauelemente (10) dienen.

15. Verfahren nach Anspruch 12, **dadurch gekennzeichnet, daß** durch Walzen einer selektive Zinn-Depot-Auflage (Inlay-Sn-plating) die Leiterbahnstruktur (1) verzinnt und die elektronische Bauelemente (10) gemeinsam mit den Kontaktfahnen (8) der Buchsenkontakte (6) verlötet werden.

16. Verwendung eines Steckverbinders nach einem der Ansprüche 1 bis 11 für eine Zündeinrichtung von Airbag-Systemen in Kraftfahrzeugen, wobei
a) der erste Stecker (SI) am Gehäuse des Airbags (15) ausgeformt ist,
b) die durch die Leiterbahnstruktur (1) mit den elektrischen Bauelementen (10) realisierte elektrische Schaltung eine Zündsteuerung ist,
c) der zweite Stecker (S II) über in diesem integrierte Verbindungselemente mit einem Kabelbaum (32) hin zu einer Zentraleinheit des Airbags-Systems verbunden ist.

17. Verwendung nach Anspruch 16, **dadurch gekennzeichnet, daß** der zweite Stecker (S II) mittels Schneidklemmverbindern (26) an den Kabelbaum (32) angeschlossen ist.

## Claims

1. A connector (C) incorporating a conductive track structure (1) having electrical components mounted thereon, wherein
a1) a first plug (SI) is connected to the conductive track structure (1) via a first group of contact elements (7/2.1),
a2) the conductive track structure (1) is formed from a metal tape,
a3) the conductive track structure (1) is, in turn, connected to a second plug (SII) via a second group of contact elements (2.2/7),
b) the conductive track structure (1) is implemented in the form of a plane surface perpendicular to the contact elements (2.1, 2.2, 7),
c) a window-like opening (4), which adjoins a plug region (CA) such that it is perpendicular thereto in one direction, is formed in the conductive track structure (1),
d) the plug region (CA) receives both the first plug (SI) and also the second plug (SII) which is inserted from the opposite direction through the window-like opening (4) in the conductive track structure (1),
e) each of the two groups of contact elements of the connector (C) consists of at least one contact element which are constructed,
e1) as a connector pin (2.1, 2.2) in the form of a pin-like tongue (2.0) of the conductive track structure (1) which is bent into the plug region (CA), said pin being connected therein to an associated sleeve-like contact element (34, 11.2) of the respectively associated plug, or
e2) as a sleeve contact (7) which is electrically connected in the plug region (CA) to an associated pin-like contact element (34.2, 11) of the respectively associated plug and, at the other end thereof, to the conductive track structure (1).

2. A connector in accordance with Claim 1, **characterised in that** the plug region (CA) comprises insulating chambers (6) for the sleeve contacts (7), which are held within said chambers by means of latches or clamping means.

3. A connector in accordance with Claim 2, **characterised in that** each sleeve contact (7) comprises a laterally bent contact lug (8) and, at the rim of the window-like opening (4) in the conductive track structure (1), there are provided contact zones (3) via which the sleeve contacts (7) are electrically connected to the conductive track structure (1) by means of their contact lugs (8).

4. A connector in accordance with Claim 1, **characterised in that** the conductive track structure (1) including the contact elements are fixed in the plug region (CA) by means of an injection moulding of synthetic material (5) and the contour of this injection moulding (5) of synthetic material is such that it enables the first and the second plugs (SI / SII) to be mechanically retained.

5. A connector in accordance with Claim 4, **characterised in that** the contour of the plug region (CA) comprises arresting elements, especially latching hooks and/or latching openings, for the two plugs whereby the two plugs are arrested in the plug region (CA) after insertion therein.

6. A connector in accordance with Claim 1, **characterised in that** the conductive track structure (1) incorporating the electrical components (10) is provided with an overlapping cover (23) which likewise comprises a window-like opening through which the second plug (S II) is inserted into the plug region (CA).

7. A connector in accordance with Claim 6, **characterised in that** arresting elements (24) for the second plug (S II) are provided on the cover (23).

8. A connector in accordance with any of the preceding Claims 4 to 7, **characterised in that** reverse-poling prevention means are provided for protecting against wrongly poled insertion so that the plugs are only insertible if they are positioned in a manner corresponding to the predefined electrical poling.

9. A connector in accordance with Claim 8, **characterised in that** the arresting elements in the plug region (CA) and/or the arresting elements (24) on the cover (23) are arranged as reverse-poling prevention means with respect to the plugs (SI / - S II).

10. A connector in accordance with any of the preceding Claims, **characterised in that** there is provided a short-circuiting bridge (13) for short-circuiting the contact elements (11) in the first plug (S I), said bridge being reset by the insertion of the second plug (S II).

11. A connector in accordance with any of the preceding Claims, **characterised in that** spring tongues (31) for applying a bias force between the plug region (CA) and the second plug (S II) are arranged on the cover (23).

12. A method of manufacturing a connector (C) incorporating a conductive track structure (1) having electrical components (10) mounted thereon in accordance with any of the preceding Claims 2 to 10, **characterised by** the following features:
a) stamping a raw form of the conductive track structure (1) in one piece from the metal tape thereby forming conductive tracks and pin-like tongues (2.0) which are held together by additional retaining webs (16),
b) forming a window-like opening (4) in the conductive track structure wherein, for the purpose of forming a plug region (CA),
b1) a first group (2.1) of pin-like tongues (2.0) are bent out perpendicularly to form contact elements for a first plug (S I) and
b2) a second group (2.2) of pin-like tongues (2.0) are bent out in a U-shape to form contact elements for a second plug (S II),
b3) whereby the second plug (S II) penetrates into the plug region (CA) through the window-like opening (4) in the conductive track structure (1) from the opposite direction to that of the first plug (S I),
c) fixing the conductive track structure (1) by means of an injection moulding of synthetic material (5),
d) severing the retaining webs (16) for the purposes of electrically insulating the individual conductive tracks,
e) mounting electrical components (10) on the conductive track structure (1).

13. A method in accordance with Claim 12, **characterised in that** the injection moulding of synthetic material (5) for fixing the conductive track structure (1) at least partially covers one side of the conductive track structure (1) and simultaneously forms the plug region (CA).

14. A method in accordance with Claim 12, **characterised in that** the conductive track structure (1) is stamped with a punched edge (21) and webs (22), which connect the conductive track structure (1) to the punched edge (21), serve as test pins for the components (10) disposed on the conductive track structure (1) after the punched edge (21) has been separated therefrom.

15. A method in accordance with Claim 12, **characterised in that** the conductive track structure (1) is tinned by rolling on a selective tin-deposit layer (inlay Sn plating) and the electronic [sic] components (10) are soldered in conjunction with the contact lugs (8) of the sleeve contacts (6).

16. The use of a connector in accordance with any of the Claims 1 to 11 for a firing device for the airbag systems in motor vehicles wherein,
a) the first plug (S I) is formed on the housing of the airbag (15),
b) the electrical circuit implemented by the conductive track structure (1) incorporating the electrical components (10) is a firing control system,
c) the second plug (S II) is connected via connecting elements integrated therein to a cable harness (32) extending to a central unit of the airbag system.

17. The use in accordance with Claim 16, **characterised in that** the second plug (S II) is connected to the cable harness (32) by means of crimp-type connectors (26).

## Revendications

1. Connecteur (C) comportant une structure de voies conductrices (1) équipée de composants électriques (10), dans lequel
a1) une première fiche (SI) est reliée à la structure de voies conductrices (1) par l'intermédiaire d'un premier groupe d'éléments de contact (7/2.1),
a2) la structure de voies conductrices est formée à partir d'une bande métallique,
a3) la structure de voies conductrices (1) est reliée à nouveau par l'intermédiaire d'un second groupe d'éléments de contact (2.2/7) à une seconde fiche (SII),
b) la structure de voies conductrices (1) est réalisée sous la forme d'une surface plane perpendiculaire aux éléments de contact (2.1, 2.2, 7),
c) dans la structure de voies conductrices (1) est formée une ouverture en forme de fenêtre (4), à laquelle une zone à fiches (CA) se raccorde perpendiculairement dans une direction,
d) la zone à fiches (CA) loge aussi bien la première fiche (SI) que, dans la direction opposée, à travers l'ouverture en forme de fenêtre (4) de la structure de voies conductrices (1), la seconde fiche (SII),
e) chacun des deux groupes d'éléments de contact du connecteur (C) est constitué respectivement par au moins un élément de contact, les éléments de contact étant agencés
e1) sous la forme d'une broche de raccordement (2.1, 2.2) qui a la forme d'une languette (2.0) en forme de broche de la structure de voies conductrices (1), est coudée dans la zone à fiches (CA) et est reliée à un élément de contact en forme de douille associé (34, 11.2) de la fiche respectivement associée, ou
e2) sous la forme d'un contact à douille (7), qui est relié électriquement, dans la zone à fiches (CA), à un élément de contact en forme de broche associé (34.2, 11) de la fiche associée et d'autre part la structure de voies conductrices (1).

2. Connecteur selon la revendication 1, **caractérisé en ce que** la zone à fiches (CA) comporte des chambres d'isolation (6) pour les contacts à douille (7), dans lesquelles ces contacts sont retenus par encliquetage ou serrage.

3. Connecteur selon la revendication 2, **caractérisé en ce que** chaque contact à douille (7) comporte une languette de contact (8) coudée latéralement et que sur le bord de l'ouverture en forme de fenêtre (4) dans la structure de voies conductrices (1) sont prévues des zones de contact (3), au moyen desquelles les contacts à douille (7) sont reliés électriquement par leurs languettes de contact (8) à la structure de voies conductrices (1).

4. Connecteur selon la revendication 1, **caractérisé en ce que** la structure de voies conductrices (1) ainsi que les éléments de contact dans la zone à fiches (CA) sont fixés au moyen d'un enrobage de matière plastique formé par injection (5) et que cet enrobage en matière plastique formé par injection (5) possède un contour qui permet un maintien mécanique des première et seconde fiches (SI /- SII).

5. Connecteur selon la revendication 4, **caractérisé en ce que** la zone à fiches (CA) possède, dans son contour pour les deux fiches, des éléments d'arrêt, notamment des crochets d'encliquetage et/ou des ouvertures d'encliquetage et que de ce fait les deux fiches sont bloquées après leur insertion dans la zone à fiches (CA).

6. Connecteur selon la revendication 1, **caractérisé en ce qu'**il est prévu un couvercle (23), qui recouvre la structure de voies conductrices (1) équipée des composants électriques (10) et qui comporte également une ouverture en forme de fenêtre, par laquelle la seconde fiche (S II) est introduite dans la zone à fiches (CA).

7. Connecteur selon la revendication 6, **caractérisé en ce que** des éléments de blocage (24) pour la seconde fiche (S II) sont prévus sur le couvercle (23).

8. Connecteur selon l'une des revendications précédentes 4 à 7, **caractérisé en ce que** des moyens de protection contre une inversion de polarité sont prévus pour une protection vis-à-vis d'une inversion de polarité, de telle sorte que les fiches peuvent être insérées uniquement dans l'une des positions qui correspond à la polarité électrique prévue.

9. Connecteur selon la revendication 8, **caractérisé en ce que** les éléments de blocage de la zone à fiches (CA) et/ou les éléments de blocage (24) du couvercle (23) sont disposés par rapport avec la fiche (SI/SII) en tant que moyen de protection contre une inversion de polarité.

10. Connecteur selon l'une des revendications précédentes, **caractérisé en ce qu'**il est prévu un étrier de court-circuit (13), qui sert à court-circuiter des éléments de contact (11) de la première fiche (S I), qui est rétractée sous l'effet de l'insertion de la seconde fiche (S II).

11. Connecteur selon l'une des revendications précédentes, **caractérisé en ce que** des languettes élastiques (31) sont disposées sur le couvercle (23) pour l'obtention d'une précontrainte entre la zone à fiches (CA) et la seconde fiche (SII).

12. Procédé pour fabriquer un connecteur (C) comportant une structure de voies conductrices (1) équipée de composants électriques (10) selon l'une des revendications précédentes 2 à 10, **caractérisé par** les caractéristiques suivantes:
a) découpage d'une ébauche de la structure de voies conductrices (1) d'un seul tenant à partir d'une barre métallique, des voies conductrices et des languettes en forme de broches (2.0) étant formées en étant retenues par des barrettes supplémentaires de retenue (16),
b) aménagement, dans la structure de voies conductrices, d'une ouverture en forme de fenêtre (4), dans laquelle pour la formation d'une zone à fiches (CA),
b1) un premier groupe (2.1) des languettes en forme de broches (2.0) sont coudées en tant qu'éléments de contact perpendiculairement à une première fiche (SI), et
b2) un second groupe (2.2) des languettes en forme de broches (2.0) sont coudées en forme de U, en tant qu'éléments de contact, en direction d'une seconde fiche (SII),
b3) la deuxième fiche (SII) pénétrant, dans la direction opposée comme la première fiche (SI) dans la zone à fiches (CA) par l'ouverture en forme de fenêtre (4) de la structure de voies conductrices (1),
c) fixation de la structure de voies conductrices (1) au moyen de l'enrobage en matière plastique formé par injection (5),
d) sectionnement des barrettes de retenue (16) pour l'isolation électrique des différentes voies conductrices,
e) équipement de la structure de voies conductrices (1) avec des composants électriques (10).

13. Procédé selon la revendication 12, **caractérisé en ce que** l'enrobage en matière plastique formé par injection (5) servant à fixer la structure de voies conductrices (1) laisse dégagée la structure de voies conductrices (1) au moins par endroits d'un côté et que la zone à fiches (CA) est simultanément dégagée.

14. Procédé selon la revendication 12, **caractérisé en ce qu'**on découpe la structure de voies conductrices (1) avec un bord perforé (21) et des barrettes (22), qui relient la structure de voies conductrices (1) au bord perforé (21), servent après la séparation du bord perforé (21), en tant que broches de test pour les composants (10) disposés sur la structure de voies conductrices (1).

15. Procédé selon la revendication 12, **caractérisé en ce qu'**on étame la structure de voies conductrices (1) par application par laminage d'un dépôt sélectif d'étain (Inlay-Sn-Plating) et qu'on fixe par brasage les composants électroniques (10) en commun avec les languettes de contact (8) des contacts à douille (6).

16. Utilisation d'un connecteur selon l'une des revendications 1 à 11, pour un dispositif d'amorçage de systèmes d'airbag dans des véhicules automobiles, dans laquelle:
a) la première fiche (SI) est formée sur le boîtier de l'airbag (15),
b) le circuit électrique réalisé au moyen de la structure à voies conductrices (1) comportant les éléments électriques (10) est une unité de commande d'allumage,
c) la seconde fiche (S II) est reliée par l'intermédiaire d'éléments de liaison intégrés dans cette fiche, à un faisceau de câbles (32) aboutissant à une unité centrale du système d'airbag.

17. Utilisation selon la revendication 16,
**caractérisée en ce que** la seconde fiche (S II) est raccordée au faisceau de câbles (32) au moyen d'organes de liaison à découpage et serrage (26).
